# EUROPEAN PATENT APPLICATION

(11) **EP 4 641 064 A1**
(43) Date of publication of application: **29.10.2025**
(21) Application number: 24172317.0
(22) Date of filing: 25.04.2024
(51) Int. Cl.: F16L 55/179, F16L 55/165

(54) **A BLADDER, A PACKER TOOL ASSEMBLY AND A METHOD FOR ASSEMBLING THE PACKER TOOL ASSEMBLY**

(71) Applicant: Boldan Oy, 05200 Rajamäki (FI)
(72) Inventor: MÖTTÖNEN, Tuomas, 05200 Rajamäki (FI); JÄNTTI, JOONA, 05200 Rajamäki (FI)
(74) Representative: Boco IP Oy Ab

(57) **Abstract**

The disclosure relates to a bladder (1) for positioning a connection liner when forming a junction of a cured-in-place-pipeline. The bladder (1) comprising a body (1a) defining a tubular main section (2) and a tubular branch section (3) extending outwardly from the main section (2), between opposing ends (2a, 2b) of the main section (2). A distal end (3a) of the branch section (3) is open and an inside of the body (1a) is open between the main section (2) and the branch section (3). The bladder (1) comprises a pocket (4) arranged on the inside of the body (1a), on the tubular main section (2), the pocket (4) defining a pocket volume (4a) configured for receiving an end piece (7) of a packer tool, so as to rotationally engage therewith.

## Description

### FIELD OF THE DISCLOSURE

The present disclosure relates to forming a junction in a cured-in-place-pipeline, and more particularly to a bladder and a packer tool assembly for positioning a connection liner so as to form a junction of a cured-in-place-pipeline. The present disclosure further concerns a method for assembling the packer tool assembly.

### BACKGROUND OF THE DISCLOSURE

Typically, when forming a cured-in-place pipelines (CIPP), a liner impregnated with resin is introduced into a pre-existing pipeline or conduit. The liner is inflated against the internal wall of the pre-existing pipeline and cured, for example, by introducing a steam flow into the liner.

Conventionally, junctions (e.g., between a branch line and a main line) of a CIPP have been formed by introducing a packer tool assembly along a main line into correct position and orientation. A bladder corresponding to the form of the junction is attached to the packer tool, and a connection liner impregnated with resin is positioned on the bladder. The portions of the bladder and connection liner corresponding to the branch line are folded back into the bladder, so as ensure the packer tool assembly to fit in the pre-existing pipeline. Moreover, as the packer tool can be attached to both main ends of the bladder, the bladder along with the connection liner, as a whole, can be positioned and oriented (i.e., rotated) correctly within the pipeline. Subsequently, the bladder can be inflated, causing the portions corresponding to the branch line to be pushed out of the folded configuration, and the connection liner is pushed into intended position the against the inner walls of the main line and the branch line(s), where the resin is cured.

Occasionally, the junction is more accessible from the branch line, making it more feasible to form the junction of the CIPP form the branch section. This is particularly the case when the distance to the junction is much greater along the main section than it is along the branch section. When introducing the packer tool assembly along the branch line, the packer tool has to be received within the bladder along a portion thereof corresponding to the branch line section of the junction, while the portion of the bladder corresponding to the main line sections of the junction have to be folded within the bladder (along with the corresponding parts of the connection liner), so as to allow the packer tool assembly to be inserted into position along the branch line. Consequently, this results in no opposing end being available for conventional attachment of the packer tool. This has been previously addresses by providing the packer tool with an end piece distanced from packer head with an intermediate rod, the end piece abutting against an internal wall surface of the bladder opposing the branch line section thereof. While this allows longitudinal positioning of the bladder and the connection liner along the pipeline, orientating (i.e., rotating) the packer tool assembly correctly has been more demanding as rotating the packer tool assembly may cause the bladder and the connection liner to curl or twist. When the bladder is then inflated, it may not have sufficient room within the pipeline to uncurl, or the position of the bladder and the connection in their uncurled state may be incorrect. Notably, this has not been a problem when introducing the packer tool assembly along the main line, as this allows the packer tool to be coupled to opposing longitudinal ends of the bladder.

### BRIEF DESCRIPTION OF THE DISCLOSURE

An object of the present disclosure is to provide a bladder and a packer tool assembly allowing proper orienting thereof when being introduced into a pipeline junction along a branch section. A method for assembling the packer tool assembly is also concerned.

The object of the disclosure is achieved by a bladder, packer tool assembly and method which are characterized by what is stated in the independent claims. The preferred embodiments of the disclosure are disclosed in the dependent claims.

The disclosure is based on the idea of providing a pocket within the bladder, with which pocket the packer tool can engage rotationally. As the bladder can be rotationally engaged with the packer tool at two distinct positions, namely the pocket and an at a portion corresponding to the branch section of the pipeline, undesired curling can be avoided, or at least minimized.

As a result, proper orientation of the bladder and connection liner is achieved even when the packer tool is introduced along the branch line of the junction.

According to a first aspect of the present disclosure, a bladder for positioning a connection liner when forming a junction of a cured-in-place pipeline is provided. In the context of this disclosure, the term pipeline is used to describe pipelines or conduits used in, for example, drains, sewers, utilities (water, oil gas), various industry piping and HVAC systems The bladder comprises a body, which defines a tubular main section having a first main end and a second main end opposing the first main end. Notably, the first main end and the second main end are closed or closable. The body further defines a tubular branch section extending outwardly from the main section, between the first main end and second main end thereof. Notably, a distal end of the branch section is open, which allows a packer tool to be inserted into the bladder from said distal end.

An inside of the body is open between the main section and the branch section. That is, the branch section opens into the main section, and the main section opens into the branch section.

The bladder comprises a pocket arranged on the inside of the body, most suitably on the tubular main section. Moreover, the pocket defines a pocket volume configured for receiving an end piece of a packer tool, so as to rotationally engage therewith.

For example, the pocket-volume may have a rotationally non-symmetric shape so as to allow rotational engagement with the end-piece in a form-fitting manner. Naturally, other shapes of the pocket volume may be envisaged, as long as rotational engagement with an end piece of an associated packer tool is achievable.

This allows the bladder to be rotationally engaged with a corresponding packer tool at two distinct positions, namely a distal end of the branch section (through which the packer tool is inserted within the bladder) and at the pocket. Consequently, this eliminates curling of the bladder between these points, and allows precise orienting of the bladder and an associated connection liner.

Preferably, the body of the bladder is made of an elastic material, and more preferably, the body embeds a fibre reinforcement. For example, the body of the bladder may be made of silicone material embedding a polyester fibre reinforcement. Most suitably, the pocket is of the same material as the body of the bladder.

In an embodiment of the first aspect according to the disclosure, the pocket has a pocket wall facing towards the branch section. Suitably, a hole is provided on the wall for allowing an intermediate bar of the packer tool to extend therethrough, so as to couple the intermediate bar with the end piece within the pocket. This prevents said end piece from accidentally being removed from the pocket.

Preferably, the pocket volume is rotationally non-symmetric about the hole. This allows the end piece to form-fittingly engage the pocket in rotation, while still being couplable to the intermediate bar centrally.

In an embodiment according to the first aspect of the disclosure, the pocket has at least one open side, through which the end piece of the packer tool can be introduced into the pocket. For example, such an open side may be arranged by providing a non-attached section of a periphery of the pocket (i.e., a portion of the pocket's edge not attached to the inside of the bladder body). Moreover, multiple such open sides can be provided.

In an embodiment according to the first aspect of the disclosure, the pocket is provided on a projection of an extension of the branch section. In other words, the pocket may be provided on a portion of the inside of the main section visible when viewed from the distal end of the branch section. This both facilitates assembly of the packer tool assembly and ensures that bladder is properly fitted on the packer tool ensuring proper inflation of the bladder when in position.

In an embodiment of the first aspect according to the disclosure, the pocket is formed by a sheet attached to an inner wall surface of the tubular main section. In such a case, the sheet preferably constitutes the wall of the pocket. For example, the sheet may be attached by stitching, sewing, adhesive(s), welding or any combination thereof.

It should be noted that the first aspect of the present disclosure encompasses any combination of two or more embodiments, or variants thereof.

According to a second aspect of the present disclosure, a packer tool assembly for positioning a connection liner when forming a junction of a cured-in-place pipeline is provided. The packer tool assembly comprises a bladder, as discussed above in connection with the first aspect of the present disclosure, and a packer tool.

The packer tool, in turn, comprises a packer head having a bladder side end, a coupling side end and a sealing surface separating said bladder side end and coupling side end. The packer tool further comprises an intermediate bar and an end piece.

An inner surface of the bladder's branch section is attached against the sealing surface of the packer tool (e.g., with a clamping band, tape, zip ties, adhesive or any combination thereof), such that the bladder side end resides within the inside of the bladder body and the coupling side end of the packer head faces away from the bladder.

Moreover, the end piece is received within the pocket, and the intermediate bar is attached between the bladder end side of the packer head and the end piece, so as to transmit rotation therebetween. Suitably, the intermediate bar extends through the hole of the pocket.

In use, the packer head is coupled to a cable and/or hose for pushing the packer tool assembly into a pipeline, while simultaneously allowing rotation of the packer tool assembly along with the packer. This allows the bladder and the connection liner to be oriented appropriately, as both rotational and translational manipulation of the packer head is transmitted along the intermediate bar and the end piece to an additional position of the bladder and the connection liner placed thereon. After being positioned and oriented, a pressurized medium can be introduced into the bladder through the packer head so as to inflate the bladder and press the connection liner against the internal wall of the pre-existing pipeline to be cure in correct position and orienation.

In an embodiment of the second aspect according to the disclosure, the intermediate bar is attached to the end piece with a threaded connection or a form fit connection. Suitably, an adhesive, such as a thread locking compound, may additionally be provided to secure the connection between the intermediate bar and the end piece.

It should be noted that the second aspect of the present disclosure encompasses any combination of two or more embodiments, or variants thereof.

According to a third aspect of the present disclosure, a method of assembling the packer tool assembly according to the second aspect is provided. In the method, the end piece is inserted into the pocket. After insertion of the end piece into the pocket, the intermediate bar is attached to the end piece. Suitably, the intermediate bar is inserted through the hole prior to being attached to the end piece.

Furthermore, in the method, the intermediate bar is attached to the bladder side end of the packer head, and the inside of the of the branch section is attached against the sealing surface.

### BRIEF DESCRIPTION OF THE DRAWINGS

In the following the disclosure will be described in greater detail by means of preferred embodiments with reference to the accompanying drawings, in which:
Fig. 1 schematically depicts a bladder according to an embodiment of the present disclosure, shown as a perspective view;
Fig. 2 schematically depicts the bladder of Fig. 1, shown as a cut view along a longitudinally extending central plane of the bladder;
Fig. 3 schematically depicts a packer tool assembly including the bladder of Fig. 1, shown as a cross-sectional cut view cut along a transversally extending central plane of the bladder, and
Fig. 4 schematically depicts the bladder of Fig. 1, shown as a plan view seen from a distal end of a branch section of the bladder.

### DETAILED DESCRIPTION OF THE DISCLOSURE

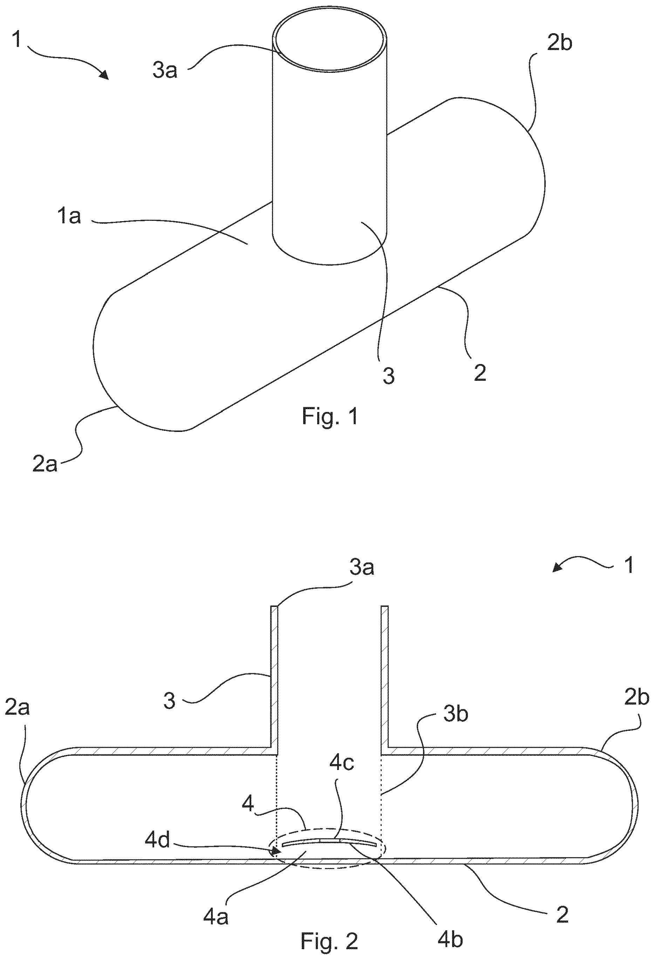

Fig. 1 schematically depicts a bladder 1 according to an embodiment of the present disclosure, shown as a perspective view. Notably, the body 1a of the bladder defines a tubular main section 2 extending longitudinally between a first main end 2a and an opposing second main end 2b. A tubular branch section 3 extends outwardly from the main section. Notably, the distal end 3a of the branch section 3 is open.

While Fig. 1 depicts the branch section 3 extending perpendicularly from a middle portion of the main section 2, it should be noted that the positions and orientation / inclination of the branch section 3, as well as the lengths and diameters of the main section 2 and the branch section 3 may be chosen to correspond with the form and shape of the junction it is intended for.

Moreover, while Fig. 1 depicts both the first main end 2a and the second main end 2b as closed ends, either or both of them may alternatively be open, as long as they are closable (e.g., with a clamp band, tape, zip-ties, adhesive or any combination thereof).

Fig. 2 schematically depicts the bladder of Fig. 1, shown as a cut view along a longitudinally extending central plane of the bladder. From Fig. 2 it can be clearly seen that the inside of the body 1a is open between the main section 2 and the branch section 3.

Also, Fig. 2 illustrates a pocket 4 (indicated with dashed lines) formed by a pocket wall 4b defining a pocket volume 4a. The pocket has open sides 4d facing both the first longitudinal end 2a and the second longitudinal end 2b. It should be noted that a single open side would suffice for allowing the end piece (not depicted in Fig.2) to be inserted into the pocket volume 4a. Moreover, the pocket wall 4b has a hole 4c facing towards the open distal end 3a of the branch section 3. It can also be seen from Fig. 2 that the pocket 4 is arranged within a projection 3b of an extension of the branch section.

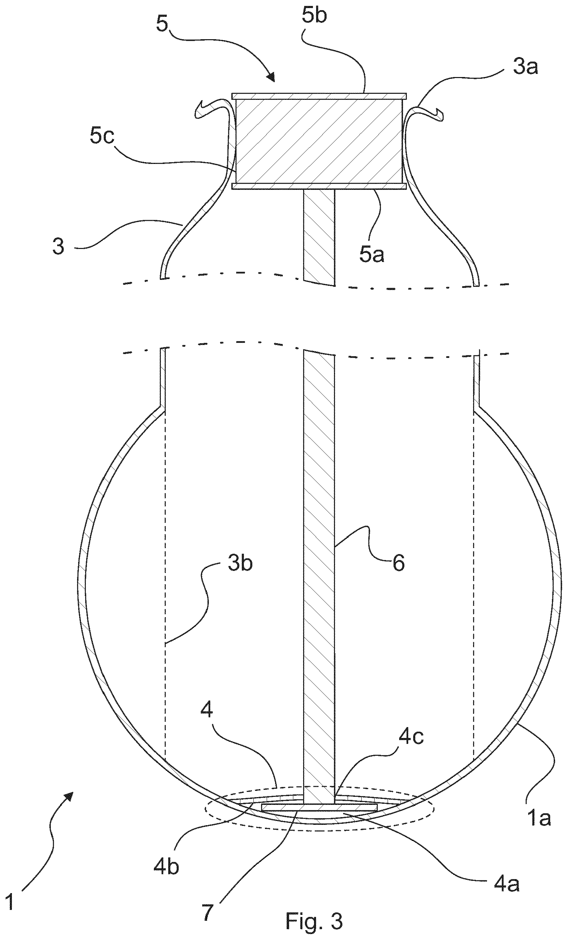

Fig. 3 schematically depicts a packer tool assembly including the bladder of Fig. 1, now shown as a cross-sectional view cut along a central plane extending transversally to the longitudinal direction of the bladder 1. Notably, Fig. 3 shows the end piece 7 received within the pocket volume 4a of the pocket 4. The intermediate bar 6 extends through the hole 4c on the pocket wall 4b, between the end piece 7 and the bladder side end 5a of the packer head 5. Moreover, the distal end 3a of the branch section 3 is attached to the sealing surface 5c of the packer head such that the bladder side end 5a faces towards the inside of the bladder 1 and the coupling side end 5b faces outwardly from the bladder 1, thereby allowing it to be freely couples with a cable and/or hose for manipulating the packer head assembly. While Fig. 3 does not illustrate the associated attachment means, this could be done e.g., with a clamp band, zip ties, tape, adhesive, or any combination thereof.

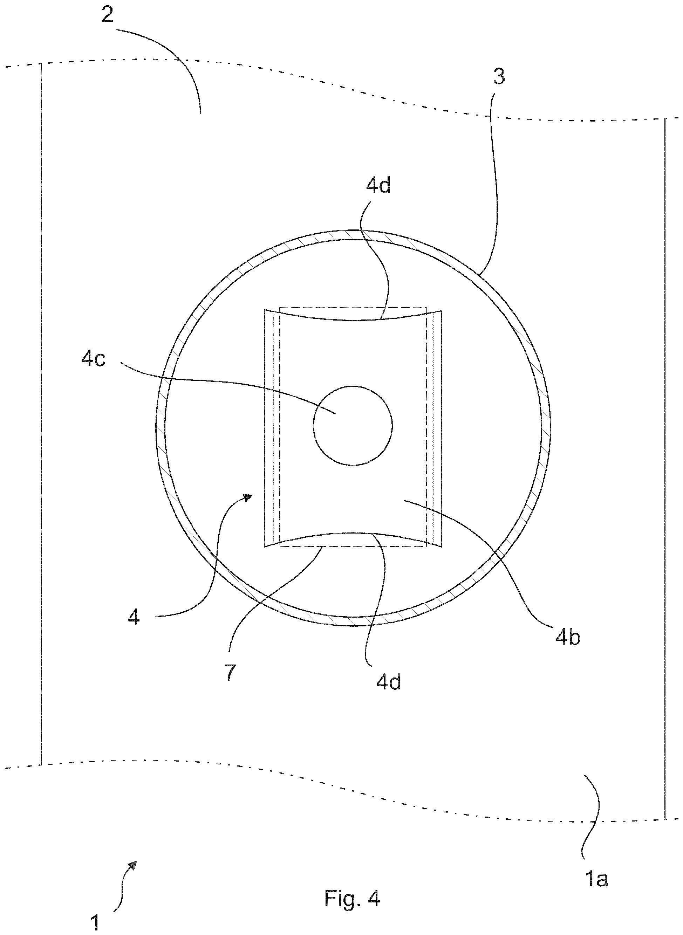

Fig. 4 schematically depicts the bladder 1 of Fig. 1, now shown as a plan view seen from the distal end 3a of a branch section 3. Fig. 4 more clearly illustrate the construction of the pocket 4. Notably, in the illustrated embodiment, the pocket wall 4b is constituted by a sheet attached to the inside surface of the main section from opposing side of the sheet. This configuration provides a simple structure facilitating manufacture, and provides the pocket with two open ends 4d for allowing the end piece 7 (depicted with dashed lines) to be inserted into the pocket.

### LIST OF REFERENCE NUMERALS

- 1: bladder
- 1a: body
- 2: main section
- 2a: first main end
- 2b: second main end
- 3: branch section
- 3a: distal end
- 3b: projection
- 4: pocket
- 4a: pocket volume
- 4b: pocket wall
- 4c: hole
- 4d: open side
- 5: packer head
- 5a: bladder side end
- 5b: coupling side end
- 5c: sealing surface
- 6: intermediate bar
- 7: end piece

## Claims

1. A bladder (1) for positioning a connection liner when forming a junction of a cured-in-place-pipeline, the bladder (1) comprising a body (1a) defining:
- a tubular main section (2) having a first main end (2a) and a second main end (2b) opposing the first main end (2a), the first main end (2a) and the second main end (2b) being closed or closable, and
- a tubular branch section (3) extending outwardly from the main section (2), between the first main end (2a) and second main end thereof (2b), a distal end (3a) of the branch section (3) being open,
wherein an inside of the body (1a) is open between the main section (2) and the branch section (3),
**characterized in that** the bladder (1) comprises a pocket (4) arranged on the inside of the body (1a), on the tubular main section (2), the pocket (4) defining a pocket volume (4a) configured for receiving an end piece (7) of a packer tool, so as to rotationally engage therewith.

2. The bladder (1) according to claim 1, **characterized in that** the pocket (4) has a pocket wall (4b) facing towards the branch section (3), a hole (4c) being provided on said wall (4b) for allowing an intermediate bar (6) of the packer tool to extend therethrough, so as to couple the intermediate bar (6) with the end piece (7) within the pocket (4

3. The bladder (1) according to claim 2, **characterized in that** the pocket volume (4a) is rotationally non-symmetric about the hole (4c).

4. The bladder (1) according to any of the preceding claims 1-3, **characterized in that** the pocket (4) has at least one open side (4d), through which the end piece (7) of the packer tool can be introduced into the pocket.

5. The bladder (1) according to any of the preceding claim 1-4, **characterized** the pocket (4) is provided on a projection (3b) of an extension of the branch section.

6. The bladder (1) according to any of the preceding claim 1-5, **characterized in that** the pocket (4) is formed by a sheet attached to an inner wall surface of the tubular main section (2).

7. The bladder (1) according to claim 6, **characterized in that** the sheet constitutes the wall (4b) of the pocket (4).

8. The bladder (1) according to claim 6 or 7, **characterized** the sheet attached by one or more of the following; stitching / sewing, adhesive, welding.

9. The bladder (1) according to any of the preceding claims 1-8, **characterized in that** the pocket (4) is of the same material as the body (1a) of the bladder (1).

10. The bladder (1) according to any of the preceding claims 1-9, **characterized in that** the body (1a) of the bladder (1) is made of an elastic material, preferably embedding a fibre reinforcement.

11. The bladder (1) according to claim 10, **characterized in that** the body (1a) of the bladder (1) is made of silicone embedding a polyester reinforcement.

12. A packer tool assembly for positioning a connection liner when forming a junction of a cured-in-place-pipeline, **characterized by** comprising:
a bladder (1) according to any of the preceding claims 1-11, and
a packer tool, in turn, comprising.
- a packer head (5) having a bladder side end (5a), a coupling side end (5b) and a sealing surface (5c) separating said bladder side end (5a) and coupling side end (5b), and
- an intermediate bar (6), and
- an end piece (7),
wherein an inner surface of the branch section (3) is attached against the sealing surface (5c) of the packer tool, such that the bladder side (5a) end resides within the inside of the bladder body (1a) and the coupling side end (5b) of the packer head (5) faces away from the bladder (1),
wherein the end piece (7) is received within the pocket (4), and
wherein the intermediate bar (6) is attached between the bladder end side (5a) and
the end piece (7) so as to transmit rotation therebetween.

13. The packer tool assembly according to claim 12, **characterized in that** the intermediate bar (6) extends through the hole of the pocket.

14. The packer tool assembly according to claim 12 or 13, **characterized in that** the intermediate bar (6) is attached to the end piece (7) with a threaded connection or form fit connection.

15. A method of assembling the packer tool assembly according to any of the preceding claims 12-14, **characterized by**
- inserting the end piece (7) into the pocket (4);
- attaching the intermediate bar (6) to the end piece (7);
- attaching the intermediate bar (6) to the bladder side end (5a) of the packer head (5), and
- attaching the inside of the of the branch section (3) against the sealing surface (5c).

16. The method according to claim 15, **characterized in that** the intermediate bar (6) is inserted through the hole (4c) prior to being attached to the end piece (7).
